## Europäisches Patentamt
## European Patent Office
## Office européen des brevets

(19)

(11) Veröffentlichungsnummer: **0 098 400**
**B1**

(12)

# EUROPÄISCHE PATENTSCHRIFT

(45) Veröffentlichungstag der Patentschrift:
03.09.86

(51) Int. Cl.⁴: **B 60 N 1/06**

(21) Anmeldenummer: **83105637.9**

(22) Anmeldetag: **09.06.83**

(54) Stellvorrichtung für Sitze, insbesondere Kraftfahrzeugsitze.

(30) Priorität: **01.07.82 DE 3224520**

(43) Veröffentlichungstag der Anmeldung:
**18.01.84 Patentblatt 84/3**

(45) Bekanntmachung des Hinweises auf die Patenterteilung:
**03.09.86 Patentblatt 86/36**

(84) Benannte Vertragsstaaten:
**FR GB IT**

(56) Entgegenhaltungen:
DE-B-1 297 496
DE-U-7 031 179
FR-A-2 326 308
FR-A-2 463 698
US-A-3 401 979

**Die Akte enthält technische Angaben, die nach dem Eingang der Anmeldung eingereicht wurden und die nicht in dieser Patentschrift enthalten sind.**

(73) Patentinhaber: **KEIPER RECARO GmbH & Co.,**
**Büchelstrasse 54- 58, D-5630 Remscheid 14 (DE)**

(72) Erfinder: **Lehmann, Gerhard, Reinshagener Strasse 17, D-5630 Remscheid (DE)**
Erfinder: **Werner, Heinz, Roonstrasse 15, D-5630 Remscheid- Hasten (DE)**
Erfinder: **Duhm, Hugo, Flurstrasse 7, D-5632 Wermelskirchen (DE)**

(74) Vertreter: **Mentzel, Norbert, Dipl.- Phys., Patentanwälte Dipl.- Phys. Buse Dipl.- Phys. Mentzel Dipl.- Ing. Ludewig Unterdörnen 114, D-5600 Wuppertal 2 (DE)**

## Beschreibung

Die Erfindung betrifft eine Stellvorrichtung für Sitze, insbesondere Kraftfahrzeugsitze, zur Neigungsverstellung der Rückenlehne, die über beiderseits angeordnete Gelenkbeschläge mit dem Sitzteil verbunden ist und jeder Gelenkbeschlag einen der Rückenlehne zugeordneten Gelenkhebel und einen dem Sitzteil zugeordneten Gelenkhebel aufweist, die über eine Lagerbolzen aufweisende Schwenkachse miteinander verbunden sind, wobei eine die Lage der beiden Gelenkhebel zueinander bestimmende, als Getriebe ausgebildete Ver- und Feststelleinrichtung vorgesehen ist und einer der beiden Gelenkhebel jedes Gelenkbeschlages auf einem Exzenterabschnitt der Schwenkachse gelagert ist, wobei der Lagerbolzen eines Gelenkbeschlages über eine Handhabe verdrehbar und durch eine Übertragungswelle mit dem Lagerbolzen des anderen Gelenkbeschlages drehfest verbunden ist.

Eine aus der DE-B-1 297 496 bekannte Rückenlehnenstellvorrichtung für Sitze besteht im wesentlichen aus zwei Gelenkbeschlägen, wovon jeweils einer auf jeder Sitzlängsseite zwischen dem Sitzteil und der Rückenlehne angeordnet ist. Dabei weist jeder Gelenkbeschlag eine aus einem Lagerbolzen gebildete Schwenkachse mit einem Exzenterabschnitt auf, über welchen die beiden Gelenkhebel eines Gelenkbeschlages miteinander drehverbunden sind. Während sich der eine Gelenkhebel - beispielsweise der mit der Rückenlehne verbundene Gelenkhebel - auf einem zentrischen Abschnitt der Schwenkachse abstützt, ist der andere Gelenkhebel - beispielsweise der mit dem Sitzteil verbundene Gelenkhebel - auf dem Exzenterabschnitt derart gelagert, daß seine Außenverzahnung in die Innenverzahnung des erstgenannten Gelenkhebels eingreift und mit diesem ein sogenanntes Taumelgetriebe bildet. Die beiden Lagerbolzen der auf beiden Sitzlängsseiten angeordneten Gelenkbeschläge sind in bekannter Weise durch eine in unrunde Bohrungen eines jeden Lagerbolzens eingreifende Übertragungsstange miteinander verbunden. Außerdem ist mit dem Lagerbolzen auf einer Sitzseite eine Handhabe über eine Mitnehmerscheibe drehfest verbunden, wodurch eine Verstellung der mit der Rückenlehne verbundenen Gelenkhebel ermöglicht wird. Infolge des Spiels an den Verbindungsstellen zwischen der Übertragungsstange und dem Lagerbolzen eines jeden Gelenkbeschlages einerseits und an der Verbindungsstelle der Handhabe mit einem Lagerbolzen andererseits, in Verbindung mit der Elastizität der Übertragungsstange selbst und auch infolge nicht exakter Fluchtung der Exzenterhöchstpunkte der beiden Gelenkbeschläge, kommt es beim Verstellen der Rückenlehnenneigung insbesondere bei dem Gelenkbeschlag, an welchen die Sitzbewegung durch die Übertragungswelle weitergegeben wird, zu einer stotternden Bewegung, die der Fachmann als Judder-Bewegung bezeichnet. Eine derartige Judder-Bewegung verursacht insbesondere neben einem unruhigen Bewegungsablauf auch Geräusche während der Verstellbewegung. Dabei ergeben sich besondere Schwierigkeiten bei solchen Rückenlehnen, deren Rahmen aufgrund seiner Konstruktionsweise relativ starr ist.

Aus der FR-A 2 326 308 ist eine Neigungsverstellung der Rückenlehne von Sitzen bekannt, bei der außer der Schwenkachse für die Gelenkhebel eine räumlich davon getrennt angeordnete, separate Stellwelle vorhanden ist. Während die Schwenkachse aus jeweils einem im einen Gelenkhebel festgelegten Lagerbolzen besteht, ist die Stellwelle aus einer unrunden Stange gebildet, deren beide Enden jeweils eine Stützscheibe drehfest durchdringen, die mit einem Ringvorsprung auf einer zentrischen Ausdrückung des festen Gelenkhebels unterhalb der Schwenkachse gelagert ist. Der Ringvorsprung jeder Stützscheibe weist außenseitig einen exzentrisch dazu angeordneten Umfang auf, der von einer Lagerbohrung des schwenkbaren Gelenkhebels umfaßt ist. Zentrisch zum exzentrischen Außenumfang der Stützscheibe ist in dieser die unrunde Bohrung angeordnet, welche die Enden der unrunden Stellstange aufnimmt. Mit dieser Stellstange ist auf deren einer Seite eine Handhabe verbunden. Beim Verdrehen der Handhabe und damit der Stellwelle und der Stützscheibe ist durch deren exzentrischen Außenumfang der schwenkbare Gelenkhebel um das Maß der doppelten Exzentrizität des exzentrischen Scheibenumfanges gegenüber der zentrischen Ausdrückung des festen Gelenkhebels bewegbar. Dieser Stellbereich ist im Vergleich mit der Lösung gemäß der DE-B-1 297 496 relativ gering. Die eine Schwenkachse bildenden Lagerbolzen greifen zur Funktion des Gelenkbeschlages notwendigerweise im festen Gelenkteil in ein radial verlaufendes Langloch ein und sind nicht mit einem Exzenterabschnitt versehen. Auf die Spielverhältnisse an diesen Schwenkachsen haben die Stellstange und die darauf angeordneten Exzenterscheiben keinen Einfluß.

Die Aufgabe der vorliegenden Erfindung besteht darin, eine Rückenlehnenstellvorrichtung mit einer ein Getriebe umfassenden Ver- und Feststellvorrichtung der eingangs genannten Art derart zu verbessern, daß das sogenannte Judder-Problem weitgehend beseitigt wird.

Diese Aufgabe ist mit den im Kennzeichen des Hauptanspruches angegebenen Merkmalen vorteilhaft gelöst. Insbesondere durch die direkte Verbindung der Handhabe mit der Übertragungswelle tritt eine Summierung fertigungsbedingter Spiele in den Verbindungsstellen nicht auf. Durch die unmittelbare Festlegung der Exzenterabschnitte auf übereinstimmenden Endabschnitten der Übertragungswelle lassen sich die Exzenterabschnitte derart anordnen, daß die Exzenterhöchstpunkte beider Gelenkbeschläge exakt miteinander fluchten. Einer Eigenfederung der Übertragungswelle kann durch entsprechende Dimensionierung der Welle begegnet werden. Somit findet ein Synchronlauf beider, auf den Endabschnitten der Übertragungswelle angeordneter Exzenterabschnitte statt, so daß ein stotternder Nachlauf zwischen den mit der Rückenlehne verbundenen Gelenkteilen weitgehend ausgeschaltet ist.

Weitere vorteilhafte Ausgestaltungen der Erfindung ergeben sich durch die in den Unteransprüchen angegebenen Merkmale, mit denen einerseits die axiale Lagesicherung der Handhabe auf der Übertragungswelle erzielt wird und andererseits das Übertragungsdrehmoment in der Schwenkebene des schwenkbaren Gelenkhebels auf den jeweiligen Exzenterabschnitt spiel- bzw. stotterfrei übertragen werden kann.

Die Erfindung ist in einem Ausführungsbeispiel in der Zeichnung dargestellt und wird nachfolgend näher erläutert. Es zeigen:

Fig. 1 eine aus zwei Gelenkbeschlägen bestehende Stellvorrichtung in Verbindung mit einem Rückenlehnenrahmen in einer Seitenansicht,

Fig. 2 die beiderseits des Rückenlehnenrahmens angeordneten Gelenkbeschläge in einem Schnitt nach der Linie II-II von Fig. 1 in gegenüber Fig. 1 vergrößertem Maßstab.

Auf beiden Sitzseiten sind Gelenkbeschläge 10 und 11 angeordnet, die durch eine Übertragungswelle 12 miteinander drehverbunden sind. Jeder der beiden Gelenkbeschläge umfaßt im wesentlichen einen, mit der Rückenlehne 13 fest verbundenen, schwenkbaren Gelenkhebel 14 und einen mit dem nicht dargestellten Sitzteil verbundenen,festen Gelenkhebel 15 sowie eine Stellvorrichtung 16.

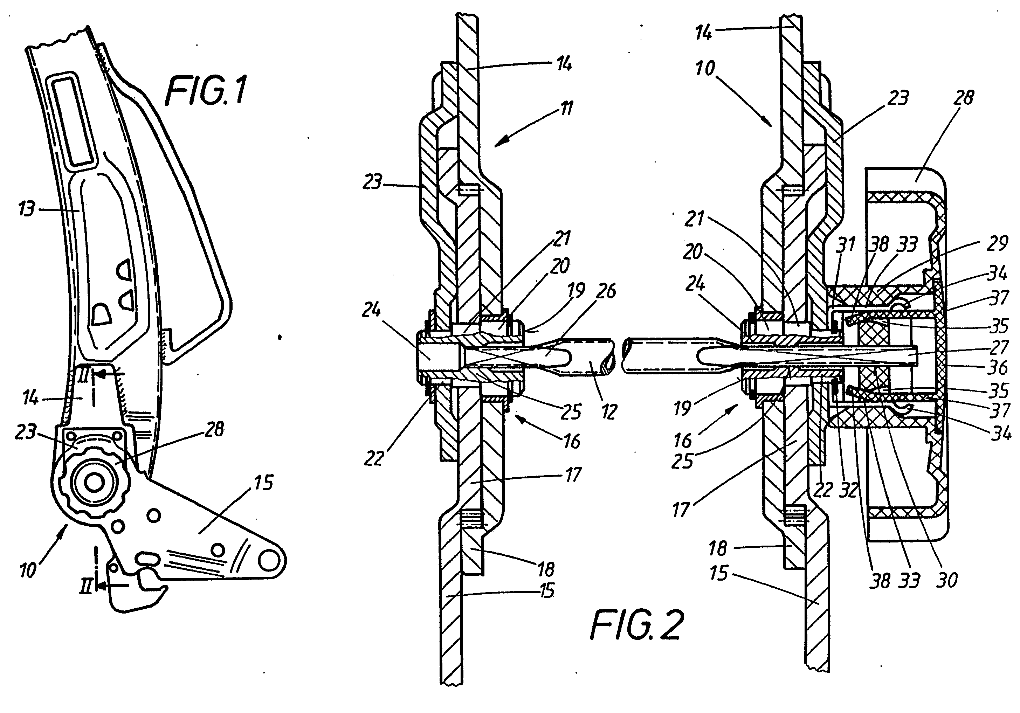

Diese Stellvorrichtung umfaßt ein, beispielsweise durch Ausprägen aus dem Gelenkhebel 15, gebildetes Stirnrad 17 mit einer Außenverzahnung, welche mit der Innenverzahnung eines beispielsweise ebenfalls durch Ausprägen gebildeten Zahnkranzes 18 des schwenkbaren Gelenkteiles 14 kämmt. Der Durchmesser des Kopfkreises des Stirnrades 17 ist um wenigstens eine Zahnhöhe kleiner als der Durchmesser des Fußkreises der Innenverzahnung des Zahnkranzes 18. Demgemäß weisen die Verzahnungen Zähnezahlen auf, die sich um wenigstens einen Zahn unterscheiden, wobei die Zähnezahl des Zahnkranzes 18 größer ist als die Zähnezahl des Stirnrades 17. Dabei ist die Anordnung der Stellvorrichtung derart gewählt, daß bei jedem Gelenkbeschlag die mit der Rückenlehne verbundenen Gelenkhebel 14 mit ihrer Innenverzahnung auf der Außenverzahnung des Stirnrades 17 der Gelenkhebel 15 abwälzen können. Die Gelenkhebel 14 und 15 sind auf einem Lagerbolzen 19 drehbar gelagert, der drei abgestufte Abschnitte 20, 21 und 22 aufweist, von denen die beiden äußeren Abschnitte 20 und 22 zentrische Abschnitte darstellen, zwischen denen ein Exzenterabschnitt 21 angeordnet ist. Auf dem Exzenterabschnitt 21 ist das Stirnrad 17 des Gelenkteiles 15 gelagert, während auf dem zentrischen Abschnitt 20 der Gelenkteil 14 gelagert ist, der außerdem über einen, beispielsweise durch Vernieten am Gelenkteil 14 festgelegten Lagerschild 23 auf dem zentrischen Abschnitt 22 den Gelenkteil 15 in axialer Richtung festlegend ebenfalls drehgelenkig abgestützt ist. Jeder Lagerbolzen 19 weist eine zu den zentrischen Abschnitten konzentrische, durchgehende Stufenbohrung 24 auf, die in ihrem mittleren Längenbereich etwa unterhalb des Exzenterabschnittes 21 eine Einschnürung 25 mit unrundem Querschnitt aufweist, der bei dem dargestellten Ausführungsbeispiel ein Vierkantquerschnitt ist. In diese Einschnürung greifen Mitnehmeransätze 26 und 27 der Übertragungswelle 12 schließend ein, wobei diese Mitnehmeransätze ebenfalls einen mit der Einschnürung 25 übereinstimmenden und dazu passenden Vierkantquerschnitt aufweisen. Während bei dem Gelenkbeschlag 11 der Mitnehmeransatz 26 der Übertragungswelle 12, wie in Fig. 2 dargestellt, an der Außenseite der Einschnürung 25 enden kann, ist der Mitnehmeransatz 27 des Gelenkbeschlages 10 über den Lagerbolzen 19 hinausragend verlängert. Auf diesem verlängerten Mitnehmeransatz 27 ist eine als Handrad ausgebildete Handhabe 28 direkt befestigt. Dabei weist das Handrad eine Nabe 29 auf, die mit einer zentrischen, unrunden Bohrung 30 den Mitnehmeransatz 27 drehfest übergreift. Dadurch wird die Drehmomenteinleitung in das Handrad direkt auf die Welle 12 übertragen, da die unrunde Bohrung 30 den gleichen Querschnitt aufweist wie der Mitnehmeransatz 27 und mit diesem drehfest gekuppelt ist. Zur axialen Halterung der Handhabe 28 an der Übertragungswelle 12 ist am Lagerbolzen 19 ein Arretierring 31 zwischen dem Lagerschild 23 und einem in einer Nut des zentrischen Abschnittes 22 festgelegten Sicherungsringes 32 gehalten. Der Arretierring 31 weist wenigstens zwei einander diametral gegenüberliegende Haltefinger 33 auf, die in entsprechende Ausnehmungen 35 in der Nabe 29 der Handhabe 28 eingreifen und mit Wulsten 34 eine durch eine Kreisausnehmung der Nabe gebildete Stützschulter hintergreifen. Dadurch ist die Handhabe 28 in axialer Richtung festgelegt, indem ihre Nabe 29 durch die Wulste 34 der Haltefinger 33 am Lagerschild 23 in Anlage gehalten wird: Zur Sicherung der Sperrlage der federnden Haltefinger 33 findet ein Verschlußstopfen 36 Verwendung, der einerseits die Kreisausnehmung der Nabe 29 außenseitig abdeckt und andererseits mit Sperrzungen 37 unterhalb der Haltefinger 33 des Arretierringes 31 in die Ausnehmungen 35 in der Nabe eingreift und mit abgewinkelten Zungenenden 38 hinter den Ausnehmungen 35 an der Nabe 29 verrastet.

Bei Drehung der Handhabe 28 wird über dessen unrunde Bohrung 30 auch der Mitnehmeransatz 27 und damit die Übertragungswelle 12 im gleichen Drehsinn wie die Handhabe 28 gedreht. Gleichzeitig werden im gleichen Drehsinn die auf den Mitnehmeransätzen 26 und 27 drehfest angeordneten Lagerbolzen 19 mitgedreht. Da die Exzenterabschnitte 21 im mit dem Sitzteil verbundenen, festen Gelenkhebel 15 gelagert sind, taumeln die zentrischen Abschnitte 20 und 22 des Lagerbolzens 19 zusammen mit dem Gelenkhebel 14 und dem damit verbundenen Lagerschild 23 um den Mittelpunkt des Exzenterabschnittes 21. Dabei wandert die Eingriffsstelle der Verzahnungen des Zahnkranzes 18 und des Stirnrades 17 in gleicher Weise auf dem Stirnrad 17 mit, so daß sich infolge der unterschiedlichen Zähnezahl der Gelenkhebel 14 gegenüber dem Gelenkhebel 15 während einer Umdrehung der Übertragungswelle 12 um den der unterschiedlichen Zähnezahl entsprechenden Zahnteilungswinkel verdreht. Da sowohl die Handhabe 28 als auch die beiden Lagerbolzen 19 eines jeden Gelenkbeschlages 10 und 11 auf der Übertragungswelle 12 unmittelbar angeordnet sind, erfolgt auch eine synchrone,von Stotterbewegungen freie Verstellung der Gelenkhebel 14 beider Gelenkbeschläge.

## Bezugszeichenliste

10 Gelenkbeschlag
11 Gelenkbeschlag
12 Übertragungswelle
13 Rückenlehne
14 Gelenkhebel, schwenkbar
15 Gelenkhebel, fest
16 Stellvorrichtung
17 Stirnrad
18 Zahnkranz
19 Lagerbolzen
20 Abschnitt, zentrisch
21 Exzenterabschnitt
22 Abschnitt, zentrische
23 Lagerschild
24 Stufenbohrung
25 Einschnürung
26 Mitnehmeransatz
27 Mitnehmeransatz
28 Handhabe/Handrad
29 Nabe
30 unrunde Bohrung
31 Arretierring
32 Sicherungsring
33 Haltefinger
34 Wulst
35 Ausnehmung

36 Verschlußstopfen
37 Sperrzunge
38 Zungenende

## Patentansprüche

1.) Stellvorrichtung für Sitze, insbesondere Kraftfahrzeugsitze, zur Neigungsverstellung der Rückenlehne (13), die über beiderseits angeordnete Gelenkbeschläge (10, 11) mit dem Sitzteil verbunden ist, und jeder Gelenkbeschlag einen der Rückenlehne (13) zugeordneten Gelenkhebel (14) und einen dem Sitzteil zugeordneten Gelenkhebel (15) aufweist, die über eine Lagerbolzen (19) aufweisende Schwenkachse miteinander verbunden sind, wobei eine die Lage der beiden Gelenkhebel (14, 15) zueinander bestimmende, als Getriebe (17, 18) ausgebildete Ver- und Feststelleinrichtung vorgesehen ist und einer der beiden Gelenkhebel jedes Gelenkbeschlages auf einem Exzenterabschnitt (21) des Lagerbolzens (19) gelagert ist, wobei der Lagerbolzen (19) eines Gelenkbeschlages (10) über eine Handhabe (28) verdrehbar und durch eine Übertragungswelle (12) mit dem Lagerbolzen (19) des anderen Gelenkbeschlages (11) drehfest verbunden ist, dadurch gekennzeichnet, daß die Lagerbolzen (19) von einer einen Mitnehmerabschnitt (25) aufweisenden Bohrung (24) durchdrungen sind, in welche beiderseits Mitnehmeransätze (26, 27) der Übertragungswelle (12) eingreifen und auf einer Sitzlängsseite ein Mitnehmeransatz (27) den Lagerbolzen (19) zur Direktaufnahme der Handhabe (28) durchgreift.

2.) Stellvorrichtung nach Anspruch 1, dadurch gekennzeichnet, daß die Handhabe (28) in ihrer Nabe (29) außer der unrunden Bohrung (30) für den Mitnehmeransatz (27) der Übertragungswelle (12) wenigstens zwei, diametral gegenüberliegende Ausnehmungen (35) aufweist, in die Haltefinger (33) eines am Lagerbolzen (19) gehalterten Arretierringes (31) eingreifen, die durch in die Ausnehmungen (35) ebenfalls eingreifende Sperrzungen (37) eines Verschlußstopfens (36) an Stützschultern der Nabe (29) festgelegt sind.

3.) Stellvorrichtung nach Anspruch 1 und/oder 2, dadurch gekennzeichnet, daß die zwei zentrische Abschnitte (20, 22) und einen dazwischenliegenden Exzenterabschnitt (21) aufweisenden Lagerbolzen (19) eine zu den zentrischen Abschnitten (20, 22) konzentrische, durchgehende Bohrung (24) aufweisen, die im Bereich des Exzenterabschnittes (21) als unrunde, auf die Mitnehmeransätze (26, 27) der Übertragungswelle (12) schließend passende Einschnürung (25) ausgebildet ist.

## Claims

1. A reclining arrangement for seats, in particular vehicle seats, for reclined adjustment of the backrest (13), which is connected with the seat element through hinge fittings (10, 11) provided on both sides thereof, and each hinge fitting has an articulated lever (14) associated with the backrest (13) and another articulated lever (15) associated with the seat element, which are interconnected via a pivot axis having bearing bolts (19), wherein there is provided an adjusting and locking arrangement designed as gearing (17, 18) defining the relative position of the two articulated levers (14, 15) and one of the two articulated levers of each hinge fitting is supported on an eccentric portion (21) of the bearing bolt (19), the bearing bolt (19) of one hinge fitting (10) being rotatable through a handle (28) and non-rotatingly connected with the bearing bolt (19) of the other hinge fitting (11) via a transmission shaft (12),
characterized in
that the bearing bolts (19) are penetrated by a bore (24) having a driving section (25), in which dogs (26, 27) of the transmission shaft (12) engage on both sides and a dog (27) extends through the bearing bolt (19) on a longitudinal side of the seat for direct accommodation of the handle (28).

2. A reclining arrangement as claimed in the claim 1, characterized in
that the handle (28), in addition to having in its hub (29) the noncircular bore (30) for the dog (27) of the transmission shaft (12), has therein at least two diametrically opposite recesses (35) engaged by the holding fingers (33) of a stop ring (31) mounted to the bearing bolt (19), which are firmly positioned against supporting shoulders of the hub (29) by interlock tongues (37) of a plug (36), also engaging in the recesses (35).

3. A reclining arrangement as claimed in the claim 1 and/or 2, characterized in
that the two central portions (20, 22) and the bearing bolts (19) having an eccentric portion (21) interposed therebetween, have a through-bore (24) concentric relative to the central portions (20, 22), which, in the area of the eccentric portion (21) is designed as a noncircular necked-down portion (25) in form fit on the dogs (26, 27) of the transmission shaft (12).

## Revendications

1.- Dispositif d'ajustage pour sièges, notamment pour des sièges de voitures automobiles, permettant de régler l'inclinaison du dossier (13), qui est relié sur les deux côtés par des ferrures d'articulation (10, 11) à l'élément d'appui du siège, dans lequel chaque ferrure d'articulation comporte un levier d'articulation (14) associé au dossier (13) et un levier d'articulation (15) associé à l'élément d'appui, lesdits leviers étant reliés l'un à l'autre par un axe de pivotement comportant des fuseaux (19), cependant qu'il est prévu un mécanisme de réglage et de blocage sous forme de mécanisme de transmission, qui détermine la position relative des deux leviers d'articulation (14, 15), et qu'un des deux leviers d'articulation de chaque ferrure d'articulation est monté sur un segment excentrique (21) du fuseau (19), le fuseau (19) d'une des ferrures d'articulation (10) étant orientable angulairement à l'aide d'une poignée (28) et solidarisée en rotation du fuseau (19) de l'autre ferrure d'articulation (11), caractérisé en ce que les fuseaux (19) sont traversés d'un alésage (24) comprenant un segment d'entraînement (25), cependant que des protubérances d'entraînement (26, 27) de l'arbre de transmission (12) s'engagent sur les deux côtés dans ledit alésage et que sur un côté longitudinal du siège une protubérance d'entraînement (27) traverse le fuseau (19) pour recevoir directement ladite poignée (28).

2.- Dispositif d'ajustage selon la revendication 1, caractérisé en ce que la poignée (28) comporte dans son moyeu (29), outre l'alésage non circulaire (30) pour la protubérance d'entraînement (27) de l'arbre de transmission (12), au moins deux évidements (35) diamétralement opposés dans lesquels s'engagent des doigts d'arrêt (33) d'une bague d'arrêt (31) montée sur le fuseau (19), lesdits doigts étant immobilisés sur des épaulements d'arrêt du moyeu (29) par des languettes de blocage (37) d'un bouchon de fermeture (36), qui pénètrent également dans les évidements (35).

3.- Dispositif d'ajustage selon la revendication 1 et/ou 2, caractérisé en ce que les fuseaux (19) comportant deux segments centrés (20, 22) et un segment excentrique (21) disposé entre ceux-ci présentent un alésage traversant (24) concentrique par rapport auxdits segments centrés (20, 22), cet alésage formant dans la zone du segment excentrique (21) un rétrécissement (25) non circulaire adapté avec conjugaison de contours aux protubérances d'entraînement (26, 27) de l'arbre de transmission (12).

0 098 400

FIG.1

FIG.2